(19) **Europäisches Patentamt**

**European Patent Office**

**Office européen des brevets**

(11) **EP 1 052 173 B1**

(12) **EUROPEAN PATENT SPECIFICATION**

(45) Date of publication and mention
of the grant of the patent:
**24.07.2002 Bulletin 2002/30**

(51) Int Cl.⁷: **B65B 35/24**, B65B 35/52,
B65G 57/11

(21) Application number: **99830269.9**

(22) Date of filing: **06.05.1999**

(54) **Procduct feeding device in an automatic wrapping machine**

Vorrichtung zum Zuführen von Gegenständen in einer automatischen Einwickelmaschine

Dispositif d'alimentation d'objets dans une machine automatique d'enveloppement

(84) Designated Contracting States:
**DE GB IT**

(43) Date of publication of application:
**15.11.2000 Bulletin 2000/46**

(73) Proprietor: **Casmatic S.p.A.**
**40033 Casalecchio di Reno, Bologna (IT)**

(72) Inventors:
• **Gorrieri, Giordano**
**40065 Pianoro, Bologna (IT)**

• **Baldanza, Luca**
**40033 Casalecchio sul Reno, Bologna (IT)**
• **Cremonini, Moreno**
**40050 Bologna (IT)**

(74) Representative: **Marchitelli, Mauro et al**
**c/o Buzzi, Notaro & Antonielli d'Oulx**
**Via Maria Vittoria 18**
**10123 Torino (IT)**

(56) References cited:
**US-A- 4 978 275**

## Description

The present invention relates to an automatic wrapping machine of the type comprising:

- a lifting plate cyclically movable between a position for receiving a pack of products to be wrapped and a position for releasing the pack, wherein in operation the lifting plate carries out an operating cycle which includes a pause in the position for receiving the products, an upward movement towards a position for releasing the products, a pause in the releasing position and a downward movement towards the position for receiving the product, and
- product feeding means adapted to form packs arranged in the same configuration in which they will be wrapped, the feeding means being also adapted to cyclically load the single packs on the lifting plate during the periods in which the lifting plate is in said receiving position.

A machine of this type is disclosed in US-5092448. This document discloses an apparatus adapted to form packs of paper rolls formed by two or more stacked layers, comprising two or more superimposed preparation tables, each of which is adapted to form a layer of products and an oscillating table adapted to feed respective layers to the various preparation tables. The packs advance towards the lifting plate along a sliding table associated with a conveyor having product drag bars placed at predetermined intervals, which advance ad constant speed. The advancement speed of the drag bars must be synchronised with the movement of the lifting plate, so as to load a new pack on the lifting plate during the brief interval in which the lifting plate remains in the receiving position.

In the known machine, it is necessary to vary the distance between the drag bars in order to reach the maximum operative speed and the maximum efficiency with any pack size, otherwise, the maximum distance between the bars corresponding to the maximum size has to be used and the operative speed of the machine is limited to the lowest values.

US-A-4978275 discloses a palletizer including a servocontrolled sweep system for transferring groups of articles to a stacking area for stacking one group on top of the other as the pallet is indexed downward by a hoist system. A programmable logic controller controls the servocontrolled sweep system in accordance with a velocity characteristic designed to increase machine speed and efficiency.

The object of the present invention is to provide a wrapping machine of the type specified above, which can prepare packs with different lengths without having to carry out complex setting-up operations on the pack feeding system.

According to the present invention, this object is achieved by a wrapping machine having the features forming the subject of the main claim.

Characteristics and advantages of the present invention will become clear in the course of the detailed description which follows, given purely by way of non-limiting example, with reference to the attached drawings, in which:

- figure 1 is a lateral schematic view of a wrapping machine according to the present invention,
- figure 2 is a plan view of the machine of figure 1,
- figure 3 is a schematic lateral view in a greater scale of the part indicated by the arrow III in figure 1,
- figure 4 is a lateral view similar to figure 3, showing a machine arranged for forming packs consisting of two layers of products,
- figure 5 is a schematic diagram showing the variation of speed of the product feeding device during an operating cycle, and
- figure 6a, 6b and 6c are schematic diagrams showing the cycle of the lifting plate and the variation of speed of the feeding device for two different lengths of the pack of products.

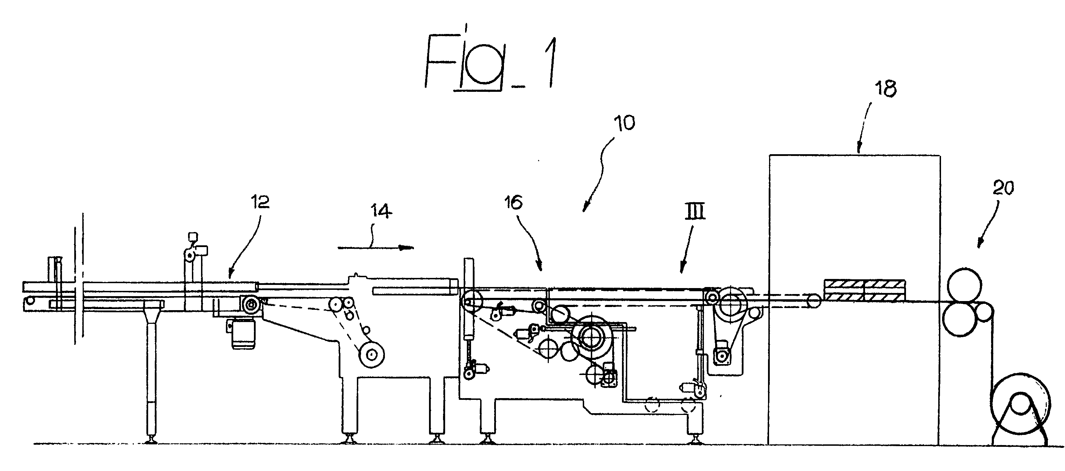

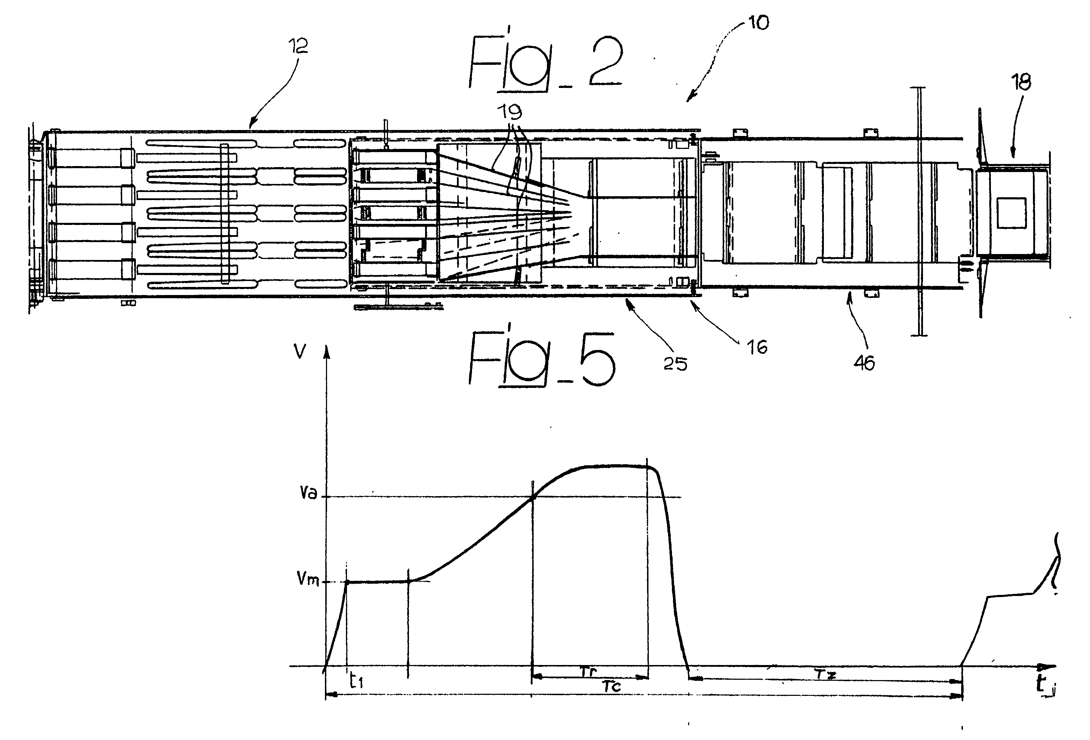

With reference to figures 1 and 2, the reference numeral 10 indicates an automatic wrapping machine adapted to form and wrap packs formed by two or more products for instance constituting of paper rolls. The machine 10 comprises a launching device 12 realised for instance as disclosed in US-A-4724946. The launching device has the purpose of dividing one or more continue lines of products in equally spaced-apart groups formed by one or more products. The groups of products formed by the launching device 12 move in the direction indicated by the arrow 14 in figure 1 and reach a feeding device 16 which carries out the formation of mutually separated packs each containing a predetermined quantity of products arranged in the same configuration in which they will be wrapped. As shown in figure 2, the feeding device 16 is provided with lateral guide walls 19 converging in the direction of movement of the products, which compact laterally the packs of products during their advance along the feeding device 16. The packs are feed at predetermined intervals to a wrapping station 18 of a type per se known, in which the individual packs are wrapped in a sheet of plastics material or paper coming from a cutting assembly schematically indicated at 20.

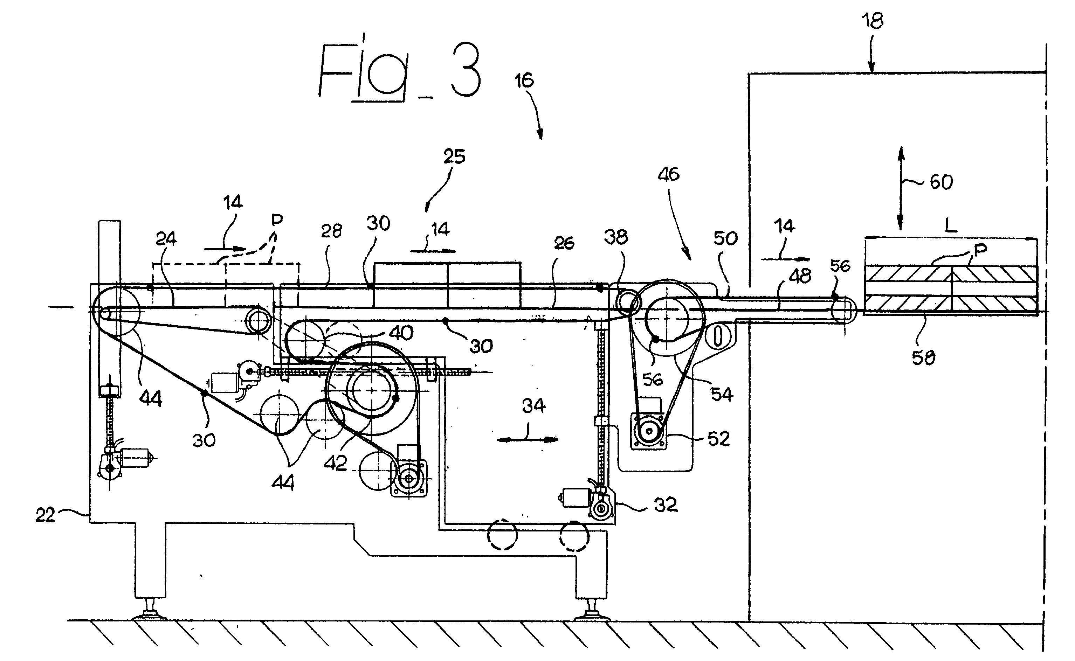

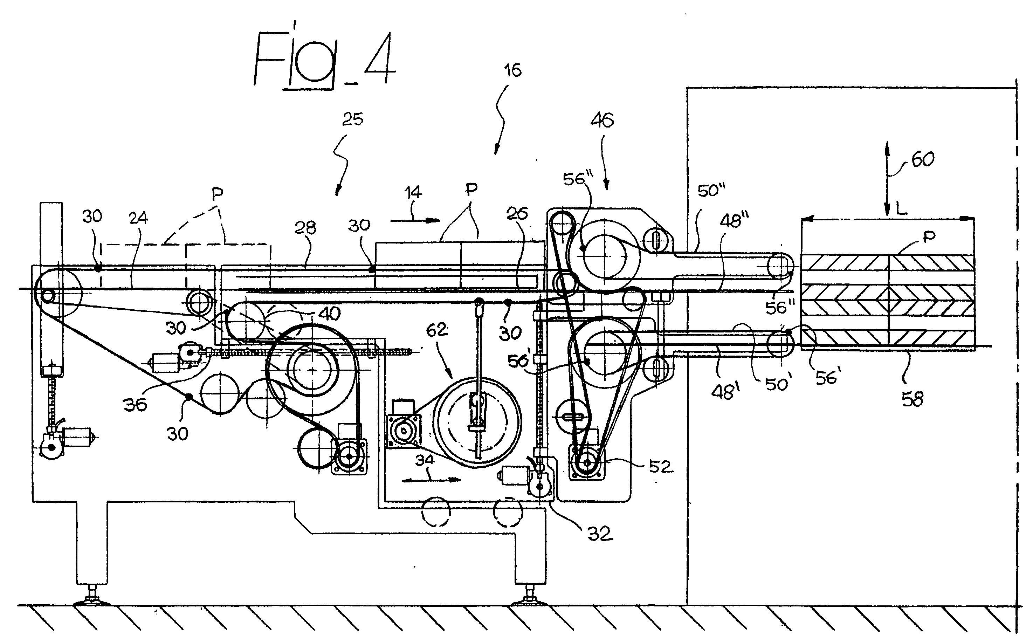

With reference to figure 3, the feeding device 16 comprises a stationary base structure 22 which carries a conveyor belt 24 which feeds the groups of products P in the direction indicated by the arrow 14 to a sliding table 26. The products P are moved along the sliding table 26 by a first conveyor 25 including a pair of motor-driven chains 28 (only one of which is visible in the figures) carrying a plurality of transversal drag bars 30 spaced apart from each other at regular intervals along the chains 28. The stationary structure 22 carries a movable structure 32 telescopically slidable with respect to the fixed structure 22 in the direction indicated by the double arrow 34. An adjustment device 36 including a screw and a nut (figure 4) enables adjustment of the position of the movable structure 32 with respect to the fixed structure 22. The movable structure 32 carries the sliding table 26 and a pair of transmission pulleys 38, 40 cooperating with the chains 28. The chains 28 cooperate also with a motor-driven pulley 42 and with a series of transmission pulleys 44 carried by the fixed structure 22. It can be seen that the chains 28 adapt automatically to variations of position of the movable structure 32 because the movement of the pulley 38 is compensated by an equal movement of the pulley 40, so that the total lengths of the chains 28 remains constant.

The movable structure 32 carries a second conveyor 46 including a second sliding table 48 and a pair of chains 50 (only one of which is visible in the figures) driven by a motor 52 by means of a pulley 54. The chains 50 of the second conveyor 46 are provided with transversal drag bars 56 spaced-apart from each other at regular intervals, which in operation push the packs of products along the sliding table 48 in the direction indicated by the arrow 14. The second conveyor 46 transfers the individual packs of products P on a lifting plate 58 which is included in the wrapping section 18. The lifting plate 58 is cyclically movable in the direction indicated by the double arrow 60 between a lowered position for receiving a pack of products to be wrapped and a raised position for releasing the pack.

Figure 4 shows a variant of the feeding device 16 which carries out the formation of packs formed by two superimposed layers. The elements corresponding to those previously disclosed are indicated by the same numeral references. The feeding device shown in figure 4 differs from the one previously disclosed in that the second conveyor 46 comprises two superimposed sliding tables 48', 48" and two pair of chains 50', 50" with transversal drag bars (56' and 56"). The sliding table 46 of the first conveyor is pivotally mounted about a transversal axis and is movable between a position in which its end is aligned with the upper sliding table 48 and a position in which its ends is aligned with the lower sliding table 48'. The oscillation of the sliding table 46 is controlled in a generally known way by a device 62. The chains 50', 50" are synchronised with each other and in operation carry out the composition of a pack P formed by two superimposed layers, as disclosed in detail in US 5092448.

In operation, the lifting plate 58 carries out an operating cycle which includes a pause in the position for receiving the products shown in figures 3 and 4, an upward movement towards a position for releasing the products, a pause in the releasing position and a downward movement towards the position for receiving the products. If we indicate by Tr the time that the lifting plate 58 spends in the position for receiving the products during each cycle, the second conveyor 46 must feed the pack P on the lifting plate with a speed Va such that: $Va \geq L/Tr$, wherein L is the lengths of the pack P. In addition, the conveyor 46 must feed a new pack P on the lifting plate 58 each time that the chains 50 or 50', 50" advance of a length equal to the distance I between the drag bars 56 or 56', 56". Consequently, the average speed of movement of the chains 50 or 50', 50" during each cycle must have a value $Vm = I/Tc$, wherein Vm is the average speed of movement of the chains during a cycle of the lifting plate 58, I is the distance between the drag bars 56 or 56', 56" and Tc is the total time of the cycle of the lifting plate 58. The distance I between the drag bars is approximately equal to the maximum lengths $L_{max}$ of the pack which can be wrapped by the machine. If the speed Va necessary for transferring a pack on the lifting plate 58 during the dwell time thereof is less or equal to the average speed of movement of the chains Vm, the chains can operate with a constant speed equal to Vm. Therefore, the chains 50 or 50', 50" can be driven with a constant speed if $Va \leq Vm$, therefore by replacing to Va and Vm the respective expression, we obtain:

$$L/Tr \leq I/Tc$$

Therefore, the condition for driving with constant speed the chains 50 or 50', 50" is the following:

$$L \leq I\ Tr/Tc \qquad [1]$$

As shown by the expression [1], if the distance I between the drag bars remains constant and if the ratio Tr/Tc remains also constant, a limit value L1 of the length of the pack of products exists, given by the expression $L1 = I \cdot Tr/Tc$, If the length of the pack L is less than the value L1 the feeding device can operate with constant speed. In the previously known solutions, when the length of the pack L exceeded the value L1 it was necessary to increase the distance between the drag bars I so as to satisfy the expression [1] which enables an operation with constant speed of the feeding device.

According to the present invention, the distance I between the drag bars is maintained constant and when the length of the packs to be feed L exceeds the limit value L1, the chains 50 or 50', 50" are driven with a speed which is variable during the feeding cycle of the products. More precisely, during the step wherein a pack of products is loaded on the lifting plate the speed of the chains will have a value $Va \geq L/Tr$ and during the other steps of the cycle the speed of movement of the chains will be suitably smaller than the value Va so that the average speed of the chains during the cycle will be equal to the value $Vm = I/Tc$ which is the condition necessary in order to feed one pack for each cycle of the lifting plate with a travel of the chains with an amplitude equal to the distance I between the drag bars.

For enabling an accurate control of the speed of the chains 50 or 50', 50" during the operating cycle, the chains are driven by a numerically controlled motor 52. An electronic control unit of the machine automatically varies the speed of movement of the bars dragging a pack of products as a function of the steps of the cycle of the lifting plate 58, on the basis of the length L of the packs of products which has been programmed.

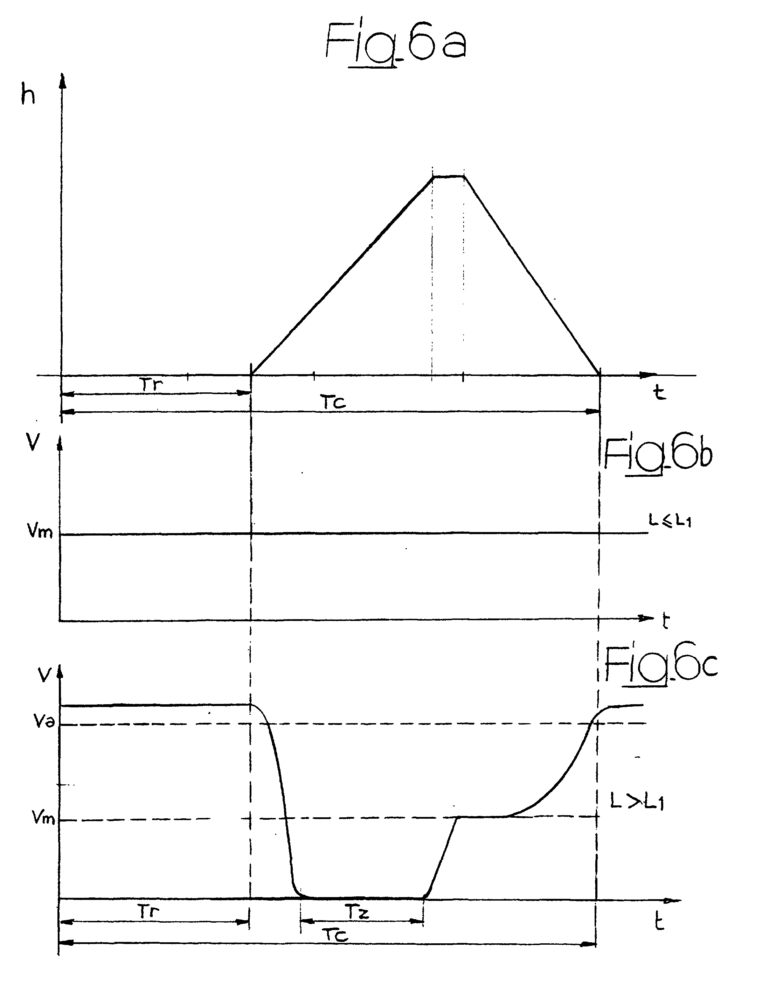

Figure 5 shows schematically a possible diagram of the variation of the speed of movement of the drag bars of the conveyor 46 as a function of the time t. In figure 5 the time Tc has been indicated, which represents the duration of the cycle of the lifting plate. Figure 5 shows also the time Tr during which the lifting plate remains in the receiving position. As can be seen, during the time Tr the speed of movement of the chains and of the drag bars of the feeding device 46 is equal to or higher than the value $Va = L/Tr$, in order to enable loading on the lifting plate of a pack with length L during the time interval Tr. Immediately after the step of loading of the pack represented by the interval Tr, the speed of the conveyor decreases rapidly until it stops and the speed remains zero for the period of time indicated by Tz. In the time interval preceding the period Tr, the speed increases rapidly from zero to the value Vm, remains constant at the value Vm for a certain period of time and increases from the value Vm until it reaches and exceed the value Va. The value of speed Vm is equal to the constant speed at which the drag bars of the first conveyor move and is therefore the speed at which the packs are transferred from the first to the second conveyor. The speed cycle of the second conveyor is synchronised with the first conveyor, so that a drag bar of the second conveyor contacts a pack at the moment T1. At this moment, the drag bar has reached the same speed at which the pack of products moves forward and therefore contacts the pack without any impact. The speed Vm represents also the value of the average speed of movement of the drag bars of the second conveyor during the cycle Tc. Therefore, since the average speed of movement of the second conveyor 46 is identical to the constant speed of the first conveyor 25, the distance I between the drag bars of the second conveyor 46 can be identical to the distance between the drag bars of the first conveyor 25.

Figure 6a shows the variation of the vertical position (height) of the lifting plate as a function of the time. The period in which the height h is zero represents the step Tr in which the lifting plate receives the products. Subsequently, the height h increases progressively until it reaches the maximum value, remains constant for a brief period of time corresponding to the step of releasing the products and returns to zero after the interval Tc, which represents the total duration of one cycle.

Figure 6b shows the time variation of the speed of movement of the drag bars of the second conveyor 46 when the length of the products L is less than or equal to the value $L1 = I \times Tr/Tc$. In this case, the speed remains constantly equal to the value Vm during the full duration of the cycle.

Figure 6c shows the time variation of the speed of the second conveyor 46 when the length of a pack L is greater than the value L1. In this case the speed has a variation similar to the one shown in figure 5, with the maximum value of the speed Va during the interval Tr and a speed equal to zero during the interval Tz. In a practical embodiment of the present invention, the length L1 of a pack marking the limits below which the feeding device is driven at a constant speed and above which the speed is variable during the cycle, is fixed at 280 mm, which represents the maximum standard length of a roll of adsorbent paper for domestic use.

Therefore, the machine according to the present invention enables a variation of the length of the packs without modifying the distance between the drag bars of the feeding device. With reference to figures 3 and 4, for changing the length L of the pack to be wrapped, it is sufficient to replace the lifting plate 58 by a plate with a different length and moving axially the movable structure 32 by means of the device 36 for maintaining the end of the sliding table 48 immediately close to the lifting plate 58. The axial movement of the movable structure 32 does not need any further adjustment because, as explained above, the chains of the first conveyor 25 automatically compensate the movement of the structure 32.

**Claims**

1. Automatic wrapping machine, comprising:

   - a lifting plate (58) cyclically movable between a position for receiving a pack of products to be wrapped (P) and a position for releasing the pack, wherein in operation the lifting plate (58) carries out a product feeding cycle (Tc) which includes a period (Tr) in which the lifting plate (58) is in a position for receiving the pack of products, an upward movement towards a position for releasing the pack of products, a pause in the releasing position and a downward movement towards the position for receiving the pack of products, and

   - means (25, 46) for feeding the products, adapted to form packs of products arranged in the same configuration in which they will be wrapped and adapted to cyclically load the individual packs on the lifting plate (58) during the periods (Tr) in which the lifting plate (58) is in said receiving position,

     **characterized in that** said feeding means (46) for loading the individual packs have a speed which is variable during a product feeding cycle (Tc), with a maximum speed that increases with the length (L) of the pack of products in the feeding direction thereof and an average speed during a cycle of the lifting plate which is inversely proportional to the duration of the product feeding cycle (Tc).

2. A machine according to claim 1, **characterized in that** during each wrapping cycle the speed of said feeding means (46) varies from zero to a maximum value (Va) equal to or greater than the ratio between the length (L) of each pack (P) and the period (Tr) in which the lifting plate (58) stays in said product receiving position.

3. A machine according to claim 1, **characterized in that** said feeding means (46) comprise product drag members (56, 56', 56") placed at a constant mutual distance (I) which is the minimum admissible simple distance for containing the maximum length of the pack which can be wrapped, and **in that** the average speed of movement of said drag members during one product feeding cycle (Tc) of the lifting plate (58) is equal to the ratio between the mutual distance of the drag members (I) and the duration (Tc) of the product feeding cycle of the lifting plate.

4. A machine according to claim 1, **characterized in that** it comprises a first and a second conveyor (25, 46) arranged in series to each other, the first conveyor (25) being driven with a constant speed and the second conveyor being driven at a variable speed having an average value (Vm) during one product feeding cycle (Tc) of the lifting plate (58) equal to the constant speed of the first conveyor.

5. A machine according to claim 4, **characterized in that** the first and the second conveyor are carried by a structure (32) whose position is adjustable along a direction (34) parallel to the direction of movement of the products (P).

**Patentansprüche**

1. Automatische Einwickelmaschine, aufweisend:

   - eine Hebeplatte (58), die zwischen einer Stellung zum Aufnehmen eines Packens von einzuwickelnden Produkten (P) und einer Stellung zum Abgeben des Packens zyklisch beweglich ist, wobei die Hebeplatte (58) im Betrieb einen Produktebeschickungszyklus (Tc) ausführt, bestehend aus einer Zeitspanne (Tr), in der die Hebeplatte (58) in einer Stellung zum Aufnehmen des Produktepackens ist, einer Aufwärtsbewegung zu einer Stellung zum Abgeben des Produktepackens, einer Haltezeit in der Abgabestellung und einer Abwärtsbewegung zu der Stellung zum Aufnehmen des Produktepak-

kens, und

   - Mittel (25, 46) zum Zuführen der Produkte, die geeignet sind, Produktepacken zu bilden, die in derselben Stellung zueinander angeordnet sind, in der sie dann eingewickelt werden, und geeignet sind, die einzelnen Packen während der Zeitspannen (Tr), in denen die Hebeplatte (58) in der Aufnahmestellung ist, zyklisch auf die Hebeplatte (58) zu laden,

   **dadurch gekennzeichnet, daß**
   die Zuführmittel (46) zum Laden der einzelnen Pakken eine Laufgeschwindigkeit aufweisen, die während eines Produktebeschickungszyklus (Tc) veränderbar ist, mit einer maximalen Laufgeschwindigkeit, die mit der Länge (L) des Produktepackens in dessen Zuführrichtung zunimmt, und einer durchschnittlichen Laufgeschwindigkeit während eines Zyklus der Hebeplatte, die umgekehrt proportional zur Dauer des Produktebeschickungszyklus (Tc) ist.

2. Maschine gemäß Anspruch 1, **dadurch gekennzeichnet, daß** sich die Laufgeschwindigkeit der Zuführeinrichtung (46) während jedes Einwickelzyklus von Null bis zu einem Maximalwert (Va) verändert, der gleich wie oder größer als das Verhältnis zwischen der Länge (L) jedes Packens (P) und der Zeitspanne (Tr) ist, in der die Hebeplatte (58) in der Produktaufnahmestellung bleibt.

3. Maschine gemäß Anspruch 1, **dadurch gekennzeichnet, daß** die Zuführmittel (46) Produkteschleppelemente (56, 56', 56") aufweisen, die in einem konstanten gegenseitigen Abstand (I) plaziert sind, welches der kleinstmögliche einfache Abstand ist, der die maximale Länge des Packens enthält, der eingewickelt werden kann, und daß die durchschnittliche Bewegungsgeschwindigkeit der Schleppelemente während eines Produktebeschickungszyklus (Tc) der Hebeplatte (58) gleich dem Verhältnis zwischen dem gegenseitigen Abstand (I) der Schleppelemente und der Dauer (Tc) des Produktebeschickungszyklus der Hebeplatte ist.

4. Maschine gemäß Anspruch 1, **dadurch gekennzeichnet, daß** sie einen ersten und einen zweiten Förderer (25, 46) aufweist, die hintereinander angeordnet sind, wobei der erste Förderer (25) mit einer konstanten Laufgeschwindigkeit angetrieben wird und der zweite Förderer mit einer veränderbaren Laufgeschwindigkeit angetrieben wird, die während eines Produktebeschickungszyklus (Tc) der Hebeplatte (58) einen Durchschnittswert (Vm) aufweist, der gleich der konstanten Laufgeschwindigkeit des ersten Förderers ist.

5. Maschine gemäß Anspruch 4, **dadurch gekenn-**

**zeichnet, daß** der erste und der zweite Förderer auf einer Struktur (32) sitzen, deren Position längs einer Richtung (34) parallel zur Bewegungsrichtung der Produkte (P) einstellbar ist.

## Revendications

1. Emballeuse automatique comprenant :

    une plaque de levage (58) déplaçable cycliquement entre une position de réception d'un bloc de produits à emballer (P) et une position de pose du bloc où, en cours d'opération, la plaque de levage (58) exécute un cycle d'alimentation du produit (E) comprenant un laps de temps (Tr) pendant lequel la plaque de levage (58) est en position de réception du bloc de produits, un mouvement vers le haut vers une position de pose du bloc de produits, un arrêt en position de pose et un mouvement vers le bas vers la position de réception du bloc de produits, et des dispositifs (25, 46) pour alimenter les produits, adaptés à la formation de blocs de produits positionnés dans la configuration selon laquelle ils seront emballés et adaptés à la charge cyclique de chaque bloc sur la plaque de levage (58) durant les laps de temps (Tr) pendant lesquels la plaque de levage (58) est dans ladite position de réception,

    **caractérisé par le fait que** pour charger chaque bloc, lesdits dispositifs d'alimentation (46) ont une vitesse pouvant varier pendant le cycle d'alimentation d'un produit (Tc), avec une vitesse maximale augmentant en même temps que la longueur (L) du bloc de produits dans le sens de leur alimentation et une vitesse moyenne pendant un cycle de la plaque de levage qui est inversement proportionnel à la durée du cycle d'alimentation du produit (Tc).

2. Une machine selon la revendication 1, **caractérisée en ce que** pendant chaque cycle d'emballage la vitesse desdits dispositifs d'alimentation (46) varie de zéro à une valeur maximale (Va) supérieure ou égale au rapport entre la longueur (L) de chaque bloc (P) et le laps de temps (Tr) pendant lequel la plaque de levage (58) demeure dans ladite position de réception des produits.

3. Une machine selon la revendication 1, **caractérisée en ce que** lesdits dispositifs d'alimentation (46) comprennent des organes d'entraînement des produits (56, 56', 56") placés à une distance (I) régulière les uns des autres, cette distance étant la distance minimale admissible pour contenir la longueur maximale du bloc pouvant être emballé, et **en ce que** la vitesse moyenne du mouvement desdits organes d'entraînement pendant un cycle d'alimentation des produits (Tc) de la plaque de levage (58) est égale au rapport entre la distance entre chaque organe d'entraînement (I) et la durée (Tc) du cycle d'alimentation des produits de la plaque de levage.

4. Une machine selon la revendication 1, **caractérisée en ce qu'**elle comprend un premier et un deuxième convoyeur (25, 46) positionnés en série l'un par rapport à l'autre, le premier convoyeur (25) étant commandé avec une vitesse constante et le deuxième convoyeur étant commandé à une vitesse variable ayant une valeur moyenne (Vm) pendant un cycle d'alimentation des produits (Tc) de la plaque de levage (58) égale à la vitesse constante du premier convoyeur.

5. Une machine selon la revendication 4, **caractérisée en ce que** le premier et le deuxième convoyeur sont supportés par une structure (32) dont la position peut être ajustée le long d'une direction (34) parallèle au sens de mouvement des produits.

Fig_1

EP 1 052 173 B1

Fig_2

12

10

19

25

16

46

18

Fig_5

V

Va

Vm

t₁

Tr

Tc

Tz

t

EP 1 052 173 B1

Fig_3

EP 1 052 173 B1

Fig. 4

# Fig.6a

# Fig.6b

# Fig.6c